# EUROPÄISCHE PATENTSCHRIFT

(11) **EP 2 092 542 B1**
(45) Veröffentlichungstag und Bekanntmachung des Hinweises auf die Patenterteilung: **13.01.2010**
(21) Anmeldenummer: 07846340.3
(22) Anmeldetag: 15.11.2007
(51) Int. Cl.: H01J 1/304, H01J 29/04

(54) **FELDEMISSIONSVORRICHTUNG**
FIELD EMISSION DEVICE
DISPOSITIF D'ÉMISSION DE CHAMP

(30) Priorität: 15.11.2006 DE 102006054206
(43) Veröffentlichungstag der Anmeldung: 26.08.2009
(73) Patentinhaber: Keesmann, Till, 69115 Heidelberg (DE)
(72) Erfinder: Keesmann, Till, 69115 Heidelberg (DE)
(74) Vertreter: Ullrich & Naumann
(86) Internationale Anmeldenummer: PCT/DE2007/002065
(87) Internationale Veröffentlichungsnummer: WO 2008/058527

(56) Entgegenhaltungen:
- EP-A- 0 632 680
- CN-A- 1 789 338
- FR-A- 2 789 223
- GB-A- 2 235 819
- JP-A- 4 315 750
- JP-A- 62 076 576
- KR-A- 20050 001 589
- US-A- 5 126 574
- US-A- 5 785 873
- US-A- 5 882 533
- US-A1- 2001 013 592
- US-A1- 2002 076 846

## Beschreibung

Die Erfindung betrifft eine Feldemissionsvorrichtung mit einer einen Emissionsbereich für Elektronen aufweisenden Kathode.

Eine Fetdemisstonsvprrichtung der Eingangs genannten Art ist bspw. aus der US RE 38,561 E und der US-A-2002 076 846 bekannt. Bei der bekannten Feldemissionsvorrichtung dient als Emissionsbereich ein Kohlenstoff-Nanoröhrchen.

In der Feldemissionsvorrichtung aus Journal of Vacuum Science & Technology B (Microelectronics and Nanometer Structures) 17 489-493 (1999) wird ein leitfähiges Material als Beimischung in ein fluoreszierendes Material gegeben, um den Elektronenstrahl auf das fluoreszierende Material zu konzentrieren; diese leitfähige fluoreszierende Schicht wird auf einer bereits vorhandenen Anodenschicht aufgebracht.

In US-A-2001 013 592 wird eine Mischung aus rotem Phosphor mit einem leitfähigen lumineszenten Material vorgeschlagen.

Bei der Feldemission werden Elektronen unter Wirkung eines hohen elektrischen Felds aus einer Kathode emittiert. Hohe elektrische Felder liegen insbesondere in Kathodenbereichen mit kleinen Krümmungsradien vor.

Bei technologischen Anwendungen einer Feldemissionsvorrichtung ist es wünschenswert, mit möglichst geringen Spannungen, möglichst hohe Feldstärken und damit eine möglichst hohe Stromdichte des Emissionsstroms im Emissionsbereich der Kathode zu realisieren.

Der vorliegenden Erfindung liegt daher die Aufgabe zugrunde, eine Feldemissionsvorrichtung anzugeben, mit der bei möglichst geringer Spannung technisch nutzbare Elektronenströme realisierbar sind.

Erfindungsgemäß wird die voranstehende Aufgabe durch eine Feldemissionsvorrichtung mit den Merkmalen des Patentanspruchs 1 gelöst: Danach weist die Feldemissionsvorrichtung ein Emissionsbereich mit einer Anordnung aus mehreren einzeln positionierten oder positionierbaren Atomen oder Molekülen auf, wobei dem Emissionsbereich gegenüberliegend eine Anode zur Anziehung der emittierten Elektronen angeordnet und die Anode als Beimischung in ein fluoreszierendes Material realisiert ist.

In erfindungsgemäßer Weise ist erkannt worden, dass für die Feldemission geeignete Emissionsbereiche dadurch erzeugt werden können, dass einzelne Atome oder Moleküle in geeigneter Weise zu einem Emissionsbereich angeordnet werden. Derartige Emissionsbereiche weisen üblicherweise sehr kleine Krümmungsradien auf. Dies hat zur Folge, dass mit sehr geringen elektrischen Spannungen technisch nutzbare Elektronenströme von der Kathode emittiert werden können. Eine Positionierung einzelner Atome könnte mit den aus der Rastertunnelmikroskopie bekannten Mitteln erfolgen.

Hinsichtlich einer besonders stabilen Anordnung der Atome oder Moleküle könnten die Atome oder Moleküle in einer Kristallstruktur angeordnet sein. Dabei lässt sich eine stabile und gleichmäßige Emission von Elektronen über einen langen Zeitraum hinweg aufrechterhalten.

Im Hinblick auf eine besonders zuverlässige Feldemissionsvorrichtung könnten die Atome, Moleküle oder Kristalle auf einem Träger angeordnet sein. Ein derartiger Träger ermöglicht eine sichere Handhabung der gesamten Feldemissionsvorrichtung.

Zur Bereitstellung eines mechanisch besonders stabilen Trägers könnte der Träger Glas, Silizium, Kohlenstoff, Rhodium, Tantal, Palladium, Palladiumoxid, Aluminium, ein Quarzmaterial, ein Ferroelektrikum, einen ferromagnetischen Stoff oder eine vorzugsweise leitfähige Keramik aufweisen. Als leitfähige Keramik bietet sich bspw. mit Aluminium dotiertes Zinkoxid - Al: ZnO - an. Eine derartige Ausgestaltung des Trägers bietet des Weiteren eine hohe Vakuumstabilität während des Betriebs der Feldemissionsvorrichtung. Beim Einsatz eines Trägers, der ein Ferroelektrikum aufweist, könnte das Ferroelektrikum bspw. Bariumtitanat aufweisen.

Bei einer alternativen Ausgestaltung könnte der Träger einen Kunststoff aufweisen oder vollständig aus Kunststoff ausgebildet sein. Als Kunststoffe bieten sich insbesondere Polyanilin, Polypyroll oder Poly-Phenylenamin als Bestandteil des Trägers oder als Trägermaterial insgesamt auf. Ganz allgemein können als Trägermaterial oder als Bestandteil des Trägers organische Metalle verwendet werden, die einige für Metalle charakteristische Eigenschaften aufweisen. Im Unterschied zu konventionellen Metallen treten dabei noch Nanoeffekte auf. Insbesondere alle Primärpartikel der verschiedenen leitfähigen Kunststoffe weisen einen Durchmesser von deutlich unter 20 nm auf. Derartige Teilchen bilden ab kritischen Konzentrationen in einer Dispersion spontan feinste Ketten und Netzwerke aus.

Zur Gewährleistung einer raumsparenden Anordnung und eines raumsparenden Einsatzes der Feldemissionsvorrichtung könnte die Kathode stabförmig oder schneidenförmig ausgebildet sein. Bei einer derartigen Ausgestaltung lassen sich mehrere Kathoden auf kleinstem Raum anordnen.

Je nach Erfordernis könnte mindestens eines der Atome oder Moleküle derart ausgewählt sein, dass es zumindest unter einer vorgebbaren Umgebungsbedingung Leiter- oder Halbleitereigenschaften aufweist. Insoweit lassen sich besonders individuelle Emissionsbereiche gestalten.

Mindestens eines der Atome könnte ein Metallatom sein, wobei sich grundsätzlich Ausgestaltungen der Feldemissionsvorrichtung anbieten, bei denen mindestens eines der Atome ein Eisen-, Magnesium-, Kupfer-, Kalium-, Platin-, Silber-, Palladium- der Goldatom ist. Auch hier ist bei der Auswahl des geeigneten Materials auf den jeweiligen Anwendungsfall für die Feldemissionsvorrichtung abzustellen.

Als weitere Alternative könnte mindestens eines der Atome ein Kohlenstoffatom sein. In jüngerer Zeit haben sich insbesondere Ausgestaltungen der Emissionsbereiche im Form von Kohlenstoff-Nanoröhrchen als sehr vorteilhaft im Hinblick auf eine sichere Emission von Elektronen gezeigt. Insoweit könnte die Anordnung des Emissionsbereichs in besonders vorteilhafter Weise in ein Kohlenstoff-Nanoröhrchen umgewandelt sein.

Auch hier sind je nach Anwendungsfall unterschiedliche Ausgestaltungen des Emissionsbereichs in Kombination mit bspw. Nanoröhrchen vorteilhaft. Im Konkreten könnten ein oder mehrere Kohlenstoffatome oder Nanoröhrchen mit Kompositstoffen verbunden sein oder im Sinne von verbundenen Nanopartikeln oder Nanokompositen vorliegen.

Kohlenstoff-Nanoröhrchen können in besonders sicherer Weise durch unterschiedliche Abscheidungsverfahren hergestellt werden. Dabei bieten sich plasmainduzierte und elektronenstrahlinduzierte Abscheidungen - PECVD und EBID (Electron-Beam-Induced-Deposition) - an.

Bei einer konkreten Ausgestaltung könnte die Anordnung im Wesentlichen die Form einer n-seitigen Pyramide aufweisen. Dabei könnte die Pyramide regulär oder nicht regulär sein, beispielsweise eine trapezförmige Grundfläche aufweisen.

Bei einer weiteren Ausgestaltung könnte die Anordnung im Wesentlichen die Form eines Pyramidenstumpfs aufweisen. Dabei ist lediglich sicherzustellen, dass ein ausreichend kleiner Krümmungsradius zur sicheren Emission von Elektronen bei möglichst geringer Spannung realisiert ist.

Bei einer weiter alternativen Ausgestaltung könnte die Anordnung im Wesentlichen die Form eines vorzugsweise regulären Polyeders aufweisen. Dabei ist auch die Form eines Würfels oder ganz allgemein Quaders denkbar.

Eine für die Feldemission geeignete Ausgestaltung könnte auch dadurch realisiert sein, dass die Anordnung im Wesentlichen die Form eines Kegels oder vorzugsweise geraden Kreiskegels oder eines Zylinders aufweist. Bei einer kegelförmigen Ausgestaltung der Anordnung als Grundform könnte die Anordnung im Wesentlichen die Form eines Kegelstumpfs aufweisen.

Im idealen Fall könnte ein einzelnes Atom oder Molekül eine Spitze des Emissionsbereichs bilden. Je nach Anwendungsfall könnten mehrere einzelne Atome oder Moleküle eine vorzugsweise schlanke Spitze, Kante oder Ecke bilden.

Der Emissionsbereich muss nicht zwangsläufig nur ein chemisches Element aufweisen. Vielmehr ist es auch denkbar, dass mindestens zwei verschiedene Arten von Atomen oder Molekülen im Emissionsbereich angeordnet sind. Gerade durch die Wechselwirkung unterschiedlicher chemischer Elemente könnte ein positiver Effekt im Hinblick auf eine sichere Feldemission bereitgestellt werden.

Bei einer praktischen Anwendung könnte die erfindungsgemäße Feldemissionsvorrichtung zur Ionisierung von Gasen, in einem Feldemissionsmikroskop, in einem Rastertunnelmikroskop oder in einem Rasterkraftmikroskop verwendbar sein. Des Weiteren könnte die erfindungsgemäße Feldemissionsvorrichtung im Bereich von Lampen oder Leuchtmitteln oder Hintergrundbeleuchtungen - backlight - eingesetzt werden. Des Weiteren ist es möglich, die Feldemissionsvorrichtung auf Schaltungsplatten, im Bereich von Mikroelementen, Mikrogeräten oder im Bereich von Datenträgem einzusetzen. Des Weiteren ist eine Anwendung im Bereich der Messsensorik, im Bereich von Handheld-Röntgenfluoreszenzanalysegeräten, in Röntgengeräten und im Bereich der Computertomografie denkbar.

Aufgrund der einfachen Handhabung und der geringen Größe der erfindungsgemäßen Feldemissionsvorrichtung könnten mehrere einzelne Feldemissionsvorrichtungen auf kleinstem Raum angeordnet werden. Im Konkreten könnten mehrere Kathoden in einer Linie oder in einer Ebene angeordnet sein, so dass eine linienförmige oder flächige Elektronenquelle - durch mehrere einzelne Emitter - gebildet ist. Dabei könnte eine unregelmäßige und zufällige Anordnung der Kathode oder auch eine symmetrische Anordnung vorgenommen werden. Hierbei ist auf den jeweiligen Einsatzfall abzustellen.

Im Konkreten könnten mehrere Kathoden in einer Ebene in Form einer Matrix angeordnet sein. Hierbei könnte eine symmetrische Anordnung einzelner Kathoden realisiert sein.

Bei Vorliegen mehrerer Kathoden könnten die einzelnen Kathoden einzeln oder in Gruppen ansteuerbar sein. Hierbei könnte berücksichtigt werden, ob der Elektronenstrom einer einzelnen Kathode für den gewünschten Anwendungsfall ausreicht oder ob mehrere Kathoden zusammengefasst erst einen ausreichenden Elektronenstrom bilden. Im letztgenannten Fall könnte dann eine gruppenweise Ansteuerbarkeit der Kathoden vorteilhaft sein.

In einer besonders vorteilhaften Ausgestaltung könnten die Kathoden jeweils als Elektronenquelle für Bildpunkte einer optischen Anzeige oder eines Displays realisiert sein. Hierbei ist insbesondere an Computer- oder TV-Bildschirme gedacht. In diesem Fall könnte dem Emissionsbereich gegenüberliegend eine Anode zur Anziehung der emittierten Elektronen angeordnet sein. Hierdurch ist eine besonders sichere Führung der emittierten Elektronen zum gewünschten Ort erreicht.

Im Konkreten könnte die Anode ein elektrisch leitfähiges Material aufweisen oder aus einem derartigen Material ausgebildet sein. Hierdurch kann eine sichere Weiterleitung von emittierten Elektronen über die Anode erfolgen.

Zur Realisierung einer Vorrichtung, bei der die Anode lediglich als Funktionselement zur Anziehung von Elektronen dient, könnte die Anode ein für Elektronen durchlässiges Material aufweisen. Von dem Emissionsbereich der Kathode emittierte Elektronen könnten in diesem Fall zur Anode hin beschleunigt und dann durch die Anode hindurch für eine weitere Anwendung hindurch treten. Eine derartige Ausgestaltung wäre insbesondere zur Realisierung eines Displays oder TV-Bildschirms vorteilhaft, wobei hier die -Elektronen durch die Anode hindurch auf ein fluoreszierendes Material auftreffen könnten.

Bei einer konkreten Ausgestaltung könnte die Anode ein Metall oder einen vorzugsweise leitfähigen Kunststoff aufweisen. Dabei könnte die Materialauswahl der Anode unter Berücksichtigung einer hohen Vakuumbeständigkeit erfolgen.

Im Konkreten könnte das Metall Aluminium, Kupfer oder Wolfram sein. Alternativ oder zusätzlich hierzu könnte die Anode Polyanilin, Polypyroll oder Poly-Phenylenamin aufweisen oder aus diesen Kunststoffen aufgebaut sein. Grundsätzlich können hier organische Metalle zum Einsatz kommen, wie sie bereits weiter oben im Zusammenhang mit dem Material des Emissionsbereichs beschrieben worden sind.

Zur Realisierung einer zur Anziehung der Elektronen wirksamen und dennoch Platz sparenden Anode könnte die Anode durch eine dünne Schicht oder einen dünnen Film gebildet sein. Eine derartige dünne Schicht oder ein derartiger dünner Film könnte zumindest abschnittsweise auf ein fluoreszierendes Material aufgebracht sein. Hierdurch liese sich in konstruktiv einfacher Weise ein TV-Bildschirm realisieren.

Bei einer alternativen Ausgestaltung könnte die Anode als Beimischung in ein fluoreszierendes Material realisiert sein. Hierbei ist eine besonders effektive Wechselwirkung zwischen den emittierten und auf das fluoreszierende Material auftreffenden Elektronen ohne Störeffekte durch eine schichtartige oder filmartige und vor dem Material angeordnete Anode gewährleistet. Mit anderen Worten können die Elektronen direkt auf das fluoreszierende Material auftreffen und einen Fluoreszenzeffekt erzeugen. Dennoch kann in diesem Fall eine sichere anziehende Wirkung für die Elektronen durch die Anode gewährleistet werden. Eine Beimischung von Anodenmaterial in das fluoreszierende Material könnte jeweils in einer flüssigen Phase der jeweiligen Materialien erfolgen. Es könnten alternativ hierzu auch feste Partikel des Anodenmaterials in ein flüssiges oder pulverförmiges fluoreszierendes Material eingemischt werden. Anschließend könnte eine Sinterung stattfinden, um quasi einen festen Körper aus Anodenmaterial und fluoreszierendem Material zu erhalten.

Bei einer besonders vorteilhaften Ausgestaltung könnte das fluoreszierende Material eine Beimischung aus einem Elektronen leitenden und/oder anziehenden Material aufweisen. Hierdurch ist eine Anziehung der Elektronen und/oder eine sichere Ableitung der auftreffenden Elektronen über das fluoreszierende Material gewährleistet.

Im Konkreten könnte das Elektronen leitende und/oder anziehende Material ein Metall aufweisen. Als Elektronen leitende Materialien kommen jedoch auch organische Metalle in Frage.

Eine wie voranstehend beschrieben ausgestattete Anode könnte auch mit anderen, bereit bekannten Feldemissionsvorrichtungen oder sonstigen Elektronenemissionsvorrichtungen verwendet werden. Es ist hierbei keine zwangsweise Verbindung der beschriebenen Anode mit einer wie im Patentanspruch 1 beschriebenen Feldemissionsvorrichtung erforderlich. Die Vorteile der Ausgestaltung der zuvor beschriebenen Anode sind teilweise oder sogar vollständig auch mit anderen Elektronenquellen erreichbar. Dabei könnte bspw. ein Einsatz der oben beschriebenen Anode auch zusammen mit einem SCE - Surface-Conduction Electron-Emitter - erfolgen, wie er bspw. bei einem SED - Surface-Conduction Electron-Emitter Display - verwendet wird.

Bei der erfindungsgemäßen Feldemissionsvorrichtung könnten im Emissionsbereich sphärische, scheibenförmige oder stabförmige Partikel vorliegen. Des Weiteren könnten Metallpartikel, Halbleiterpartikel, Polymerpartikel oder keramische Partikel vorliegen. Schließlich könnten auch Nanopartikel oder faserartige Partikel und Kombinationen sämtlicher zuvor genannter Partikel vorliegen.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung zweier Ausführungsbeispiele der erfindungsgemäßen Feldemissionsvorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein erstes Ausführungsbeispiel einer erfindungsgemäßen Feldemissionsvorrichtung und
- Fig. 2: in einer schematischen Seitenansicht ein zweites Ausführungsbeispiel einer erfindungsgemäßen Feldemissionsvorrichtung.

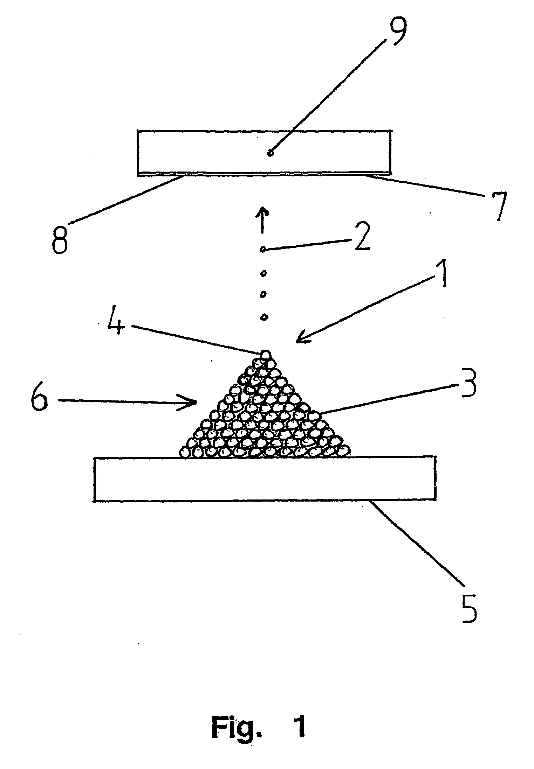

Fig. 1 zeigt in einer schematischen Seitenansicht ein erstes Ausführungsbeispiel einer erfindungsgemäßen Feldemissionsvorrichtung mit einer einen Emissionsbereich 1 für Elektronen 2 aufweisenden Kathode 3. Der Emissionsbereich 1 weist eine Anordnung aus mehreren einzeln positionierten oder positionierbaren Atomen 4 auf. Die Anordnung aus Atomen 4 ist auf einem Träger 5 angeordnet, der bspw. Glas, Silizium, oder Kohlenstoff aufweisen kann.

Die Anordnung aus Atomen 4 weist im Wesentlichen die Form einer vierseitigen Pyramide 6 auf. Dabei bildet ein einzelnes Atom 4 eine Spitze des Emissionsbereichs 1. Von der Spitze werden Elektronen 2, in Richtung einer Anode 7 emittiert.

Die Anode 7 ist als dünner Film 8 ausgebildet und auf einem fluoreszierenden Material 9 aufgebracht. Zwischen der Kathode 3 und der Anode 7 wirkt eine Spannung, die die Feldemission und damit die Beschleunigung der Elektronen 2 in Richtung Anode 7 ermöglicht. Die auf das fluoreszierende Material 9 auftreffenden Elektronen lösen eine Lichtemission in dem fluoreszierenden Material 9 aus. Die in Fig. 1 gezeigte Feldemissionsvorrichtung kann bei der Herstellung eines TV-Bildschirms verwendet werden.

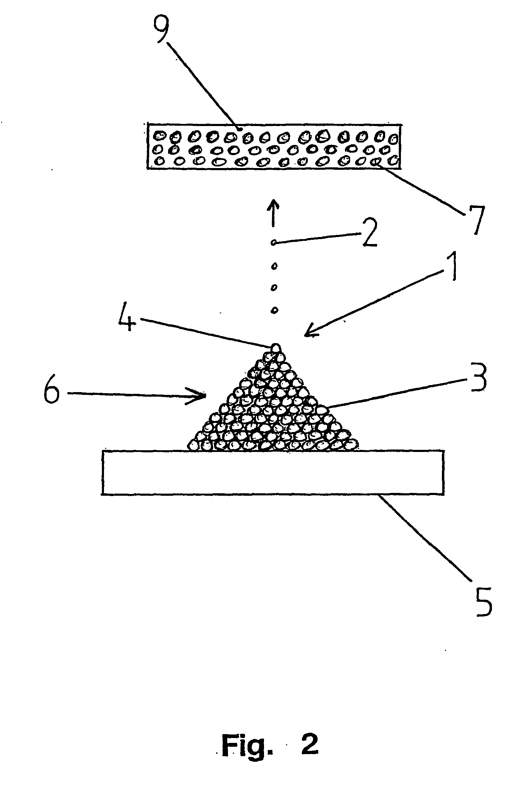

Fig. 2 zeigt in einer schematischen Seitenansicht ein zweites Ausführungsbeispiel einer erfindungsgemäßen Feldemissionsvorrichtung. Bei dem in Fig. 2 gezeigten zweiten Ausführungsbeispiel ist gegenüber dem in Fig. 1 gezeigten ersten Ausführungsbeispiel lediglich die Anode 7 unterschiedlich ausgebildet. Ansonsten entspricht der Aufbau der auf dem Träger 5 positionierten Atome 4 dem in Fig. 1 gezeigten Ausführungsbeispiel.

Bei dem zweiten Ausführungsbeispiel ist die Anode 7 als Beimischung in ein fluoreszierendes Material 9 realisiert. Im Konkreten können bspw. metallische Partikel in das fluoreszierende Material 9 eingemischt sein, um quasi eine in das fluoreszierende Material 9 integrierte Anode 7 zu bilden.

Hinsichtlich weiterer vorteilhafter Ausgestaltungen der erfindungsgemäßen Feldemissionsvorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf diese Ausführungsbeispiele einschränken.

## Patentansprüche

1. Feldemissionsvorrichtung mit einer einen Emissionsbereich (1) für Elektronen (2) aufweisenden Kathode (3), wobei der Emissionsbereich (1) eine Anordnung aus mehreren einzeln positionierten oder positionierbaren Atomen (4) oder Molekülen aufweist und wobei dem Emissionsbereich (1) gegenüberliegend eine Anode (7) zur Anziehung der emittierten Elektronen (2) angeordnet ist,
**dadurch gekennzeichnet, dass** die Anode (7) als Beimischung in ein fluoreszierendes Material (9) realisiert ist.

2. Vorrichtung nach Anspruch 1, **dadurch gekennzeichnet, dass** die Atome (4) oder Moleküle in einer Kristallstruktur angeordnet sind und/oder
dass die Atome (4), Moleküle oder Kristalle auf einem Träger (5) angeordnet sind.

3. Vorrichtung nach Anspruch 2, **dadurch gekennzeichnet, dass** der Träger (5) Glas, Silizium, Kohlenstoff, Rhodium, Tantal, Palladium, Palladiumoxid, Aluminium, ein Quarzmaterial, ein Ferroelektrikum, einen ferromagnetischen Stoff oder eine vorzugsweise leitfähige Keramik, vorzugsweise Al: ZnO, aufweist, wobei vorzugsweise
das Ferroelektrikum Bariumtitanat aufweist.

4. Vorrichtung nach Anspruch 2 oder 3, **dadurch gekennzeichnet, dass** der Träger (5) einen Kunststoff aufweist und/oder
dass der Träger (5) Polyanilin, Polypyroll oder Poly-Phenylenamin aufweist.

5. Vorrichtung nach einem der Ansprüche 1 bis 4, **dadurch gekennzeichnet, dass** die Kathode (3) stabförmig oder schneidenförmig ausgebildet ist.

6. Vorrichtung nach einem der Ansprüche 1 bis 5, **dadurch gekennzeichnet, dass** mindestens eines der Atome (4) oder Moleküle zumindest unter einer vorgebbaren Umgebungsbedingung Leiter- oder Halbleitereigenschaften aufweist und/oder
dass mindestens eines der Atome (4) ein Metallatom ist und/oder
dass mindestens eines der Atome (4) ein Eisen-, Magnesium-, Kupfer-; Kalium-, Platin-, Silber-, Palladium- oder Goldatom ist und/oder
dass mindestens eines der Atome (4) ein Kohlenstoffatom ist.

7. Vorrichtung nach einem der Ansprüche 1 bis 6, **dadurch gekennzeichnet, dass** die Anordnung in ein Kohlenstoff-Nanoröhrchen umgewandelt ist, wobei vorzugsweise
ein oder mehrere Kohlenstoffatome oder Nanoröhrchen mit Kompositstoffen verbunden sind oder im Sinne von verbundenen Nanopartikeln oder Nanokompositen vorliegen und/oder
dass die Anordnung im Wesentlichen die Form einer n-seitigen Pyramide (6) aufweist, wobei vorzugsweise
die Pyramide (6) regulär oder nicht regulär ist.

8. Vorrichtung nach einem der Ansprüche 1 bis 6, **dadurch gekennzeichnet, dass** die Anordnung im Wesentlichen die Form eines Pyramidenstumpfs aufweist oder
dass die Anordnung im Wesentlichen die Form eines vorzugsweise regulären Polyeders aufweist oder
dass die Anordnung im Wesentlichen die Form eines Kegels oder vorzugsweise geraden Kreiskegels oder eines Zylinders aufweist oder
dass die Anordnung im Wesentlichen die Form eines Kegelstumpfs aufweist.

9. Vorrichtung nach einem der Ansprüche 1 bis 8, **dadurch gekennzeichnet, dass** ein einzelnes Atom (4) oder Molekül eine Spitze des Emissionsbereichs (1) bildet oder
dass mehrere einzelne Atome (4) oder Moleküle eine vorzugsweise schlanke Spitze, Kante oder Ecke bilden.

10. Vorrichtung nach einem der Ansprüche 1 bis 9, **dadurch gekennzeichnet, dass** mindestens zwei verschiedene Arten (4) von Atomen oder Molekülen im Emissionsbereich (1) angeordnet sind und/oder
dass die Feldemissionsvorrichtung in einem Feldemissionsmikroskop, in einem Rastertunnelmikroskop oder in einem Rasterkraftmikroskop verwendbar ist.

11. Vorrichtung nach einem der Ansprüche 1 bis 10, **dadurch gekennzeichnet, dass** mehrere Kathoden (3) in einer Linie oder in einer Ebene angeordnet sind, so dass eine linienförmige oder flächige Elektronenquelle gebildet ist und/oder
dass mehrere Kathoden (3) in einer Ebene in Form einer Matrix angeordnet sind.

12. Vorrichtung nach Anspruch 11, **dadurch gekennzeichnet, dass** die einzelnen Kathoden (3) einzeln oder in Gruppen ansteuerbar sind und/oder
dass die Kathoden (3) jeweils als Elektronenquelle für Bildpunkte einer optischen Anzeige oder eines Displays realisiert sind.

13. Vorrichtung nach einem der Ansprüche 1 bis 12, **dadurch gekennzeichnet, dass** die Anode (7) ein elektrisch leitfähiges Material aufweist und/oder
dass die Anode (7) ein für Elektronen durchlässiges Material aufweist und/oder
dass die Anode (7) ein Metall oder einen vorzugsweise leitfähigen Kunststoff aufweist, wobei vorzugsweise
das Metall Aluminium, Kupfer oder Wolfram ist.

14. Vorrichtung nach einem der Ansprüche 1 bis 13, **dadurch gekennzeichnet, dass** die Anode (7) Polyanilin, Polypyroll oder Poly-Phenylenamin aufweist und/oder
dass die Anode (7) durch eine dünne Schicht oder einen dünnen Film (8) gebildet ist, wobei vorzugsweise
die dünne Schicht oder der dünne Film (8) zumindest abschnittsweise auf ein fluoreszierendes Material (9) aufgebracht ist.

15. Vorrichtung nach einem der Ansprüche 1 bis 14, **dadurch gekennzeichnet, dass** das fluoreszierende Material (9) eine Beimischung aus einem Elektronen (2) leitenden und/oder anziehenden Material aufweist, wobei vorzugsweise
das Elektronen (2) leitende und/oder anziehende Material ein Metall aufweist.

## Claims

1. A field emission device having a cathode (3), which comprises an emission area (1) for electrons (2), wherein the emission area (1) comprises a configuration made of multiple individually positioned or positionable atoms (4) or molecules and wherein an anode (7) for attracting the emitted electrons (2) is situated opposite to the emission area (1),
**characterized in that** the anode (7) is realized as an admixture in a fluorescent material (9).

2. The device according to Claim 1, **characterized in that** the atoms (4) or molecules are situated in a crystal structure and/or
that the atoms (4), molecules, or crystals are situated on a carrier (5).

3. The device according to Claim 2, **characterized in that** the carrier (5) comprises glass, silicon, carbon, rhodium, tantalum, palladium, palladium oxide, aluminum, a quartz material, a ferroelectric material, a ferromagnetic material, or a preferably conductive ceramic, preferably Al: ZnO, wherein preferably
the ferroelectric material comprises barium titanate.

4. The device according to Claim 2 or 3, **characterized in that** the carrier (5) comprises a plastic and/or
that the carrier (5) comprises polyaniline, polypyrrole, or polyphenylene amine.

5. The device according to one of Claims 1 through 4, **characterized in that** the cathode (3) is implemented as rod-shaped or disk-shaped.

6. The device according to one of Claims 1 through 5, **characterized in that** at least one of the atoms (4) or molecules has conductor or semiconductor properties at least under a pre-definable environmental condition and/or
that at least one of the atoms (4) is a metal atom and/or
that at least one of the atoms (4) is an iron, magnesium, copper, potassium, platinum, silver, palladium, or gold atom and/or
that at least one of the atoms (4) is a carbon atom.

7. The device according to one of Claims 1 through 6, **characterized in that** the configuration is converted into a carbon nanotube, wherein preferably
one or more carbon atoms or nanotubes are bonded to composite materials or are provided in the meaning of bonded nanoparticles or nanocomposites and/or
that the configuration essentially has the form of an n-sided pyramid (6), wherein preferably
the pyramid (6) is regular or irregular.

8. The device according to one of Claims 1 through 6, **characterized in that** the configuration essentially has the form of a truncated pyramid or
that the configuration essentially has the form of a preferably regular polyhedron or
that the configuration essentially has the form of a cone or preferably a right circular cone or a cylinder or
that the configuration essentially has the form of a truncated cone.

9. The device according to one of Claims 1 through 8, **characterized in that** a single atom (4) or molecule forms a tip of the emission area (1) or
that multiple individual atoms (4) or molecules form a preferably narrow tip, edge, or corner.

10. The device according to one of Claims 1 through 9, **characterized in that** at least two different types (4) of atoms or molecules are situated in the emission area (1) and/or
that the field emission device is usable in a field emission microscope, in a scanning tunneling microscope, or in an atomic force microscope.

11. The device according to one of Claims 1 through 10, **characterized in that** multiple cathodes (3) are situated in a line or in a plane, so that a linear or planar electron source is formed and/or
that multiple cathodes (3) are situated in a plane in the form of a matrix.

12. The device according to Claim 11, **characterized in that** the individual cathodes (3) are activatable individually or in groups and/or
that the cathodes (3) are each implemented as an electron source for pixels of an optical display or a display screen.

13. The device according to one of Claims 1 to 12, **characterized in that** the anode (7) comprises an electrically conductive material and/or
that the anode (7) comprises a material permeable to electrons, and/or
that the anode (7) comprises a metal or a preferably conductive plastic, wherein preferably
the metal is aluminum, copper, or tungsten.

14. The device according to one of Claims 1 through 13, **characterized in that** the anode (7) comprises polyaniline, polypyrrole, or polyphenylene amine and/or
that the anode (7) is formed by a thin layer or a thin film (8), wherein preferably
the thin layer or the thin film (8) is at least sectionally applied on a fluorescent material (9).

15. The device according to one of Claims 1 to 14, **characterized in that** the fluorescent material (9) has an admixture made of a material which conducts and/or attracts electrons (2), wherein preferably
the material which conducts and/or attracts electrons (2) comprises a metal.

## Revendications

1. Dispositif d'émission par champ électrique, comportant une cathode (3) munie d'une zone d'émission (1) d'électrons (2), ladite zone d'émission (1) comportant un arrangement de plusieurs atomes (4) ou molécules, positionnés ou aptes à être positionnés individuellement, et une anode (7) pour l'attraction des électrons (2) émis étant disposée face à la zone d'émission (1), **caractérisé en ce que** l'anode (7) est réalisée sous forme d'additif dans un matériau (9) fluorescent.

2. Dispositif selon la revendication 1, **caractérisé en ce que** les atomes (4) ou molécules sont disposés dans une structure cristalline et/ou **en ce que** les atomes (4), molécules ou cristaux sont disposés sur un substrat (5).

3. Dispositif selon la revendication 2, **caractérisé en ce que** le substrat (5) comporte du verre, silicium, carbone, rhodium, tantale, palladium, oxyde de palladium, aluminium, un matériau à base de quartz, un ferroélectrique, un matériau ferromagnétique ou une céramique, de préférence conductrice, de préférence A1 : ZnO, sachant que le ferroélectrique comporte de préférence du titanate de baryum.

4. Dispositif selon la revendication 2 ou 3, **caractérisé en ce que** le substrat (5) comporte une matière plastique et/ou **en ce que** le substrat (5) comporte de la polyaniline, du polypyrole ou du polyphénylamine.

5. Dispositif selon l'une quelconque des revendications 1 à 4, **caractérisé en ce que** la cathode (3) est réalisée en forme de barre ou de en forme de lame.

6. Dispositif selon l'une quelconque des revendications 1 à 5, **caractérisé en ce qu'**au moins un des atomes (4) ou molécules comporte des propriétés conductrices ou semi-conductrices au moins dans une condition d'environnement prédéfinissable, et/ou **en ce qu'**au moins un des atomes (4) est un atome de métal, et/ou **en ce qu'**au moins un des atomes (4) est un atome de fer, de magnésium, de cuivre, de potassium, de platine, d'argent, de palladium ou d'or, et/ou **en ce qu'**au moins un des atomes (4) est un atome de carbone.

7. Dispositif selon l'une quelconque des revendications 1 à 6, **caractérisé en ce que** l'arrangement est transformé en un nanotube de carbone, sachant que, de préférence, un ou plusieurs atomes de carbone ou nanotubes sont liés à des matériaux composites ou sont disponibles dans le sens de nanoparticules ou nanocomposites liés, et/ou **en ce que** l'arrangement possède sensiblement la forme d'une pyramide (6) à n faces, ladite pyramide (6) étant de préférence régulière ou non régulière.

8. Dispositif selon l'une quelconque des revendications 1 à 6, **caractérisé en ce que** l'arrangement possède sensiblement la forme d'une pyramide tronquée, ou **en ce que** l'arrangement possède sensiblement la forme d'un polyèdre, de préférence régulier, ou **en ce que** l'arrangement possède sensiblement la forme d'un cône ou, de préférence, d'un cône de révolution droit ou d'un cylindre, ou **en ce que** l'arrangement possède sensiblement la forme d'un cône tronqué.

9. Dispositif selon l'une quelconque des revendications 1 à 8, **caractérisé en ce qu'**un atome (4) ou molécule isolé forme une pointe de la zone d'émission (1), ou **en ce que** plusieurs atomes (4) ou molécules isolés forment une pointe, de préférence élancée, une arête ou un coin.

10. Dispositif selon l'une quelconque des revendications 1 à 9, **caractérisé en ce qu'**au moins deux types (4) différents d'atomes ou molécules sont agencés dans la zone d'émission (1), et/ou **en ce que** le dispositif d'émission par champ électrique peut être utilisé dans un microscope d'émission de champ, dans un microscope à effet tunnel ou dans un microscope à balayage de force.

11. Dispositif selon l'une quelconque des revendications 1 à 10, **caractérisé en ce que** plusieurs cathodes (3) sont disposées en une ligne ou dans un plan de manière à former une source d'électrons en linéaire ou surfacique, et/ou **en ce que** plusieurs cathodes (3) sont disposées dans un plan en forme de matrice.

12. Dispositif selon la revendication 11, **caractérisé en ce que** les différentes cathodes (3) peuvent être commandée isolément ou en groupe, et/ou **en ce que** les cathodes (3) sont réalisées respectivement sous forme de source d'électrons pour des pixels d'un afficheur optique ou d'un écran.

13. Dispositif selon l'une quelconque des revendications 1 à 12, **caractérisé en ce que** l'anode (7) comporte un matériau électroconducteur, et/ou **en ce que** l'anode (7) comporte un matériau perméable aux électrons, et/ou **en ce que** l'anode (7) comporte un métal ou une matière plastique, de préférence conductrice, le métal étant de préférence de l'aluminium, du cuivre ou du tungstène.

14. Dispositif selon l'une quelconque des revendications 1 à 13, **caractérisé en ce que** l'anode (7) comporte de la polyaniline, du polypyrole ou du polyphénylamine, et/ou **en ce que** l'anode (7) est formée par une mince couche ou un mince film (8), la mince couche ou le mince film (8) étant, de préférence, déposé au moins par zones sur un matériau (9) fluorescent.

15. Dispositif selon l'une quelconque des revendications 1 à 14, **caractérisé en ce que** le matériau (9) fluorescent comporte un additif réalisé dans un matériau conducteur et/ou attractif d'électrons (2), ledit matériau conducteur et/ou attractif d'électrons (2) comportant, de préférence, un métal.
